# EUROPEAN PATENT APPLICATION

(11) **EP 1 998 056 A1**
(43) Date of publication of application: **03.12.2008**
(21) Application number: 07109159.9
(22) Date of filing: 29.05.2007
(51) Int. Cl.: F16B 33/00, E04F 13/14, E04F 13/08

(54) **Composite fastener for ceramic components**

(71) Applicant: SGL Carbon AG, 65203 Wiesbaden (DE)
(72) Inventor: Montminy, John, 85757 Karlsfeld (DE); Hingst, Karl, 86156 Augsburg (DE); Kraus, Thomas, Dr., 86678 Ehingen (DE); Klotz, Christian, 86866 Mickhausen (DE)

(57) **Abstract**

A tubular composite member (1) with two ends (2 A,B) for connecting ceramic components (3) made of a composite comprising an inorganic matrix reinforced with inorganic fibers is provided with an at least partially threaded internal surface (4) and an external surface (6).

Further, a ceramic member (3) with at least one surface (8) provided with at least one annular groove (9) comprising an inner shell surface (10), an outer shell surface (11) and a root (12), wherein the inner shell surface (10) is at least partially threaded, is provided.

Further, a ceramic member (3) assembly comprising at least two ceramic members (3) being connected by at least one tubular composite member (1), whereas the ends (2 A, B) of said tubular composite member (1) are screwed into either corresponding annular groove (9) of two adjacent ceramic members (3), is provided. The such fastened/ joined ceramic members (3) can be operated at high temperatures (above 1000 °C) especially under thermal cycling and/or thermal shock conditions as well as dynamic mechanical load in different directions.

Further, methods to manufacture tubular composite members (1) according to this invention are provided.

## Description

### TECHNICAL FIELD OF THE INVENTION

The present invention relates to a fastening or connecting element for technical ceramic components.

### BACKGROUND OF THE INVENTION

Technical ceramics and especially fiber-reinforced ceramics belong to the group of increasingly important materials for various industrial as well as space applications due to their high temperature resistance combined with a low specific weight and other more unique properties.

Technical (also referred to as advanced, engineering, new or fine) ceramics according to this invention are either monolithic materials consisting of oxides, such as alumina or zirconia or mixtures such as Mullite, of non-oxides, such as carbon/graphite, carbides, nitrides, borides, silicides, or are composites consisting of a ceramic matrix comprising the above listed materials reinforced with inorganic fibers (e.g. carbon/ graphite, SiC, alumina). The latter composite materials can be devided into carbon fiber reinforced composites (CRFC), consisting of a carbon/ graphite matrix with carbon/ graphite fibers and into ceramic matrix composites (CMC) such as C/SiC, SiC/SiC und Al₂O₃/Al₂O₃ (the first term describes the fiber composition while the second term stands for the matrix material). While in literature materials exclusively based on carbon are sometimes treated as a material class separate from technical ceramics, they are explicitly included into the scope of this invention as their properties are similar to those of technical ceramics.

Presently, a plurality of structural components for high temperature (above 1000 °C) applications such as metallurgy, thermal protection, rocket propulsion systems etc. are produced from these materials. Larger components are produced for reasons of technical simplicity and economic considerations from individual parts according to the principle of separation and combination. For connecting such components fastening elements are necessary. Their general importance becomes obvious when one considers that they are often, depending on their application, the most important and most ubiquitous structural element overall. Threaded connections are traditionally of a great importance in machine construction, aerospace construction, and in many other technical fields.

The methods for subsequently connecting parts must be simple and economical, but also provide elements that are structurally compatible with the parts to be connected so that their load capacity and their limits with respect to applications, for example, with respect to temperature ranges, are not impeded. However, in the case of ceramic parts used at high temperatures this is not possible with fastening elements of conventional materials, for example, metallic materials. Even though metallic fastening elements have in general advantageous properties, they are essentially not suitable for connecting ceramic components. Their substantially greater coefficient of thermal expansion (CTE), their tendency to flow, and the relatively low load capacity at temperatures that are still relatively low with respect to the temperature range of ceramic materials as well as their oxidation sensitivity result in the fact that metallic fastening elements can be used at high temperatures only to a small extent. Already at operating temperatures above 1000° C, which are typical for fiber-reinforced ceramics, metallic screws can no longer be used.

In the prior art, various attempts have been described to manufacture screws and bolts from composite materials. In US 4,717,302 a composite fastener (suitable only for temperatures below 300 °C) is described that is manufactured by first forming an isotropic block from multi-dimensional woven fibers followed by machining of such block into the desired nut or bolt shape. The major disadvantage of this approach is the cut-off of the reinforcing fibers in the thread area that is substantially weakening the threads to the extend that the threads are sheared off under tensile stress. US 5,127,783 describes a CFRC or CMC threaded member including a core, a thread-defining element bonded to the exterior of the core and a reinforcing fabric layer securing the thread-defining element to the core obtained through textile manufacturing methods. The such obtained threaded members however lack dimensional precision and further the threads, i.e. the attached thread-defining elements, are sheared off under tensile stress.

Besides above examples, various other inventive approaches towards composite nuts and bolts have been described. However, the fastening system "nuts and bolts" has been developed long time ago for the purpose of connecting wooden or metal parts with nuts and bolts made of like materials. To simply transfer this concept to fastening ceramic members is not providing the desired solution, as ceramics are fairly brittle in comparison to wood or metals. This issue is further highlighted when ceramics are used at high temperatures (above 1000 °C) especially under thermal cycling and/or thermal shock conditions. Under such conditions, ceramic components with holes for engaging the fastening members (bolts) tend to crack in the hole areas ultimately leading to catastrophic failure of the ceramic components. This situation worsens if components made of different materials are connected or are used for the fastening member as their CTE differs. An even inferior situation occurs if the operating conditions for the connected ceramic components include dynamic mechanical load in different directions.

Ceramic components yield to such operating conditions completely different than e.g. metals. Hence, the inventor must take into account all those differences when designing an appropriate fastening element.

It is therefore an object of the present invention to provide a fastening element for ceramic components that are exposed to temperatures above 1000 °C.

### SUMMARY OF THE INVENTION

With the foregoing and other objects in view, there is provided, in accordance with the invention, a tubular composite member with two ends for connecting ceramic components having an at least partially threaded internal surface and being made of a composite comprising an inorganic matrix reinforced with inorganic fibers.

While a screw may be a perfect connecting mean if made of metal or wood, it will always be a compromise when it is made of inorganic fibers, as latter are known to be rather brittle but typically show a good if not exceptional strength under tension. Besides said drawbacks of the conventional screw design, if it is used to connect ceramic members that are subject to mechanical load and/or temperature changes, the relatively brittle ceramic member quickly starts to crack and very may soon after experience catastrophic failure modes. To meet those challenges, a tubular connecting member design was invented that takes into account the brittleness of inorganic fibers while building on their tensile strength.

The tubular member is preferably shaped symmetrical with respect to its rotational axis, but may also be formed slightly ellipsoidal. The latter shape provides a measure to prevent unscrewing.

Further, the tubular member may have various embossments, grooves or other complementary shapes at its surfaces that provide means to positioning, locking and /or unscrewing. However, such complementary shapes should preferably be generated by fiber winding/ laying techniques prior to pyrolysis of the tubular member and not be subsequently machined into its surfaces.

Except for the inverted bi-conical tube embodiment, the external surface of the tubular composite member may at least partially be provided with threads in addition to the at least partially threaded internal surface.

According to one embodiment, both the internal surface as well as the external surface of the said tubular member are axially tapered towards their rotational axis thus forming an inverted bi-conical tube. The taper angle of internal and external surfaces are not necessarily alike. The taper angle of the external surface may be smaller than that of the internal surface to increase the mechanical strength at the equator region where both inverted cones meet.

According to another embodiment, the internal surface of the tubular composite member is axially tapered towards its rotational axis, thus forming an inverted bi-conical shape of the internal surface.

According to another embodiment, the external surface is axially thickened away from its rotational axis, thus forming an double-frustoconical shape of the external surface.

According to another embodiment, the external surface is axially thickened away from its rotational axis and the internal surface is axially tapered towards its rotational axis.

The tubular member does not have to be symmetrical with respect to the plane perpendicular to its rotational axis. Both end of the tubular member may have different lengths and/or also different shapes.

According to another embodiment, one of both ends of the tubular member is tapered away from its rotational axis to form an inverted conical shape of said end.

The tubular composite member is reinforced with inorganic fibers that are selected from the group consisting of oxide ceramics, non-oxide ceramics, carbon, graphite or mixtures thereof. The composite matrix is provided from the same group of materials. Typical oxide ceramics are alumina or zirconia or mixtures of oxides such as Mullite. Typical non-oxide ceramics are carbides, nitrides, borides, silicides of various elements, wheras silicon carbide, silicon nitride, and boron nitride are the most common members of that category. Carbon can be derived from various carbonaceous materials, such as resins or pitch, or from polymers such as polyacrylonitrile (PAN) or polyimide. If carbon is further pyrolyzed at temperatures above 2000 °C (also called graphitized) it is gradually converted into graphite.

The tubular composite member of this invention must be able to resist high temperatures of 1000 °C or more. Depending on the operational conditions, such as thermal and mechanical loads and their duration, as well as the nature (especially the match or mismatch of the CTE) of the connected ceramic members, various types of fibers and matrix materials or mixtures thereof can be selected. If e.g. the temperatures are above 2000 °C and the operating atmosphere is oxygen-free, the fibers and matrix will most likely be selected from carbon or graphite. The selection criteria of the proper fibers as well as matrix materials is known to those skilled in the art (see also referenced literature).

The tubular composite member may consist of a carbon fiber reinforced composite (CRFC), consisting of a carbon/ graphite matrix with carbon/ graphite fibers. The carbon fibers may be derived from PAN or pitch and are commercially available from various sources as high-tow (over 25k filaments) or low tow (less than 25k filaments) in various modifications such as high-modulus or low-modulus. Such a carbon fiber is not particularly restricted but is particularly preferably a PAN-based carbon fiber. Further, these carbon fibers have fiber diameters of generally 15 µm or less, preferably 7-13 µm.

The carbon matrix may be derived from a thermosetting resin selected from an epoxy resin, a phenolic resin, a urethane resin, an unsaturated polyester resin, a polycyanate resin, a melamine resin, etc, but preferably from phenolic or furanic resins, or can be pitch-based or may be generated by vapour deposition (CVD) or vapour infiltration (CVI) of carbon from a carbon-rich gaseous phase. The matrix is typically densified in several consecutive cycles of matrix infiltration/ impregnation and curing followed by pyrolysis in inert gas atmosphere at around 1000 °C. A CFRC can be graphitized in the final step at 2000 to 2500 °C. Various ways to manufacture CRFC are known to those skilled in the art and are well documented in the literature (see e.g. in: "Carbon Reinforcements and Carbon/ Carbon Composites" by E. Fitzer, L.M.Manocha, Springer-Verlag, 1998).

The tubular composite member may also consist of ceramic matrix composites (CMC) such as C/SiC, SiC/SiC und Al₂O₃/Al₂O₃ , where the first term describes the fiber composition while the second term stands for the matrix material. Various ways to manufacture CMC are known to those skilled in the art and are well documented in the literature. The "Handbook of Ceramic Composites", by N. Basnal, Kluwer Acadamic Publishers, 2005 summarizes many of the various ways to obtain CMC including the reinforcing fibers and is therefore included as a reference. A preferred route to obtain the tubular composite member of this invention is to manufacture a C/SiC member by liquid silicone impregnation of of CFRC member. Other preferred routes comprise the utilization of a pre-ceramic matrix material which may be formed into a continuous solid phase at ambient or at elevated temperatures. The choice of the pre-ceramic precursor is dictated by its processing abilities in conjunction with the selected fibrous substrate material and the associated cost. The conversion of silicone to silica hybridized with other oxides is the currently preferred type of ceramic. Other pre-ceramic precursors, could also be adopted to successful manufacturing the tubular member with similar formulation scenarios depending upon availability and cost. Examples are polycarbosilane precursor to silicon carbide, silicon oxycarbide precursors to silicon-oxycarbide, polysilizane precursors to form silicon nitride, which form Si--C, SiO--C, and Si--N, backbones, respectively.

To provide the required strength to the tubular composite member of the invention, the inorganic fibers must comprise at least 30% by volume of said composite.

The inorganic fibers can be configured as filaments, bundles, yarns, woven, knitted or braided fabrics, non-crimped fabrics, non-wovens or mixtures thereof. Most preferably the fibers are provided as continuous fibers or filaments.

Further, said inorganic fibers should preferably have a minimum length of at least 100 mm. If the fibers are too short, the tubular member would suffer cracks and would finally be torn apart by the mechanical forces the connected ceramic members are subjected to.

The inorganic fibers used to manufacture the tubular member may be the same or, if necessary, different. For example, various types of carbon fibers may be combined or carbon fibers may be combined with ceramic fibers to wind a tubular member.

To manufacture a sufficiently strong tubular composite member, the inorganic fibers should be aligned in more than one direction. As usually several forces govern the mechanical load regime of the joint, hence tension or strain is not limited to one single direction. As well known in fiber composite technology, it is advisable to build up several layers of fibers and least some of those layers are oriented in angles of increments of 15° or 30° to each other.

To manufacture the tubular member according to this invention, at least 10% by weight, preferably at least 20% by weight of the fibers forming said tubular member are arranged in a direction with an angle of ±(10 to 20)° to the cylinder axial direction and at least 10% by weight, preferably at least 20% by weight of the fibers forming said tubular member are arranged in a direction making an angle of ±(70 to 90)° to the cylinder axial direction. This combined fiber orientation is necessary to cope with the various mechanical loads imposed on the joint. Additional fiber directions are applied depending on geometrical and mechanical factors. Preferably fibers forming said tubular member are additionally arranged in a direction making an angle of ±(40 to 50)° to the cylinder axial direction.

In a preferred embodiment of this invention, additionally the fibers extend parallel to the flanks of the threads.

One of the most important features of this invention are the threads of the at least partially threaded internal surface with a tolerance of less than +/- 0.2 mm, whereas this tolerance is achieved exclusively by winding fibers under tension on a mandrel that has the thread shape machined on its surface similar to a mold. The winding tension further provides a pre-tension to the load-bearing threads of the at least partially threaded internal surface. The tension applied during winding depends to a large extend on the tensile strength of the fibers and to a lesser extend on the required pre-tension.

The optional at least partially threaded external surface is provided by winding the fibers or the fibrous material in a near-end shape manner followed by a final application of a heated mold that has the thread shape machined on its surface.

The thus near end-shape wound threads may have various geometries that are governed by the size as well as mechanical properties of the fibers as well as of the connected ceramic members and by the operational conditions under which the connected members are being used.

The following paragraphs describe as example manufacturing details for tubular members made of CFRC but should not limit the scope of this invention as the described procedural sequences are very similar for CMC manufacturing.

The tubular member of the present invention made of CFRC can be produced by impregnating the above-mentioned carbon fibers with the above-mentioned materials in a proportion suited for the object of the present invention, shaping the impregnated fibers into a cylindrical form on a mandrel, curing and pyrolysing the tubular member. It can further be coated (e.g. with Silicon) to provide additional oxidation resistance or other operational life enhancing properties and/or it can be further graphitized.

The CFRC-made tubular members of the present invention can be produced by various methods. The methods are specifically a method using prepregs, a method by filament winding, a method which is an appropriate combination thereof, etc.

The method using prepregs is generally conducted by impregnating a carbon fiber bundle with a thermosetting resin composition (e.g. a phenolic resin composition) or pitch to prepare a prepreg, cutting the prepreg in an appropriate direction, winding the cut prepreg around a cylindrical mold in a plurality of layers so that the carbon fiber in each layer is aligned in an intended direction, as necessary applying a shrink tape thereon, and heating the prepreg laminate under applied pressure.

The method by filament winding is generally conducted by impregnating a carbon fiber bundle with a thermosetting resin composition (e.g. an unsaturated polyester resin composition) or pitch to prepare a strand, winding the strand around a mandrel at an intended angle in a plurality of layers to prepare a cylinder of given thickness on the mandrel, and heat-curing the cylinder. The method using prepregs has no particular restriction. However, in order to control the strain caused by curing shrinkage or heating shrinkage, it is desirable to laminate prepregs so that the fiber direction, etc. becomes symmetrical in the thickness direction of the laminate.

There may also be used a method in which a carbon fiber cloth is laminated in a plurality of layers and the laminate is impregnated with a resin or pitch, or a method in which a prepreg containing a carbon fiber cloth is laminated in a plurality of layers.

For producing the tubular member, the method of pure filament winding is preferred as it best allows to wind the required thread windings at the required shapes and precision. The formation of the threads during the winding process omits the produced cylinder being subjected to machine works such as milling, polishing and the like.

The proportion (volume ratio) of the carbon fiber and the thermosetting resin or pitch is 75:25 to 50:50, preferably 60:40 to 50:50.

The filaments are laminated in an appropriate thickness in order to satisfy the strength required by the cylinder to be produced. The strength requirements can additionally be met by an equatorially located cross-beam for mechanical stiffening that is being build up during winding.

The thus wound tubular member is cured on the mandrel at elevated temperatures up to 500 °C prior to detaching it from the mandrel and subjecting the tubular member to a heat treatment at high temperatures up to 3200 °C preferably in inert atmosphere. The inert gas atmosphere is not necessary especially in case of CMC made of oxide fibers and oxide matrix.

In a further embodiment, the cured tubular member is left on the mandrel und further to a heat treatment at high temperatures up to 3200 °C preferably in inert atmosphere. The mandrel material of this embodiment has to be made of appropriate high temperatures resisting materials such as graphite.

Depending on the size and shape of the tubular member, the mandrel may be provided as one single piece, in two adjacent parts, or may consist of several individual segments being assembled to a mandrel.

The tubular composite member may additionally provided with lubrication additives selected from the group of graphite, molybdenum disulfide, PTFE, boron nitride, refractory metals, mineral oils, or mixtures thereof.

Further, the tubular composite member may additionally provided with strength improving additives selected from the group of short inorganic fibers, inorganic nanofibers, or mixtures thereof.

The tubular composite member may additionally provided with oxidation retarding additives selected from the group of ammonium phosphate, zinc orthophosphate, phosphoric acid, boric acid, cupric oxide, oxide ceramics, refractory metals, or mixtures thereof.

The tubular composite member may additionally provided with a sleeve made of expanded graphite foil acting as oxidation retardant as well as providing lubrication to the external surface.

The to be connected ceramic member of this invention is selected from the group consisting of oxide ceramics, non-oxide ceramics, carbon, graphite, or mixtures thereof. The are manufactured by methods known to those skilled in the art. The various inventive geometrical shapes or features are provided through appropriate molding techniques, machining of such shapes or features or a combination of both.

The ceramic member of this invention has at least one surface provided with at least one annular groove comprising an inner shell surface, an outer shell surface and a root, wherein the inner shell surface is at least partially threaded.

In a further embodiment, the outer shell surface is at least partially threaded.

In a further embodiment, the inner shell surface of the at least one annular groove is axially tapered towards the at least one grooved surface of the ceramic member forming a frustum.

In a further embodiment, the outer shell surface of the at least one annular groove is axially enlarged towards the at least one grooved surface of the ceramic member.

In a further embodiment, the inner shell surface of the at least one annular groove is axially tapered towards the at least one grooved surface of the ceramic member forming a frustum and the outer shell surface of said annular groove is axially enlarged towards the at least one grooved surface of the ceramic member.

In a further embodiment, said at least one surface of the ceramic member is additionally provided with means to correctly position and/ or lock said ceramic member in relation to an adjacent ceramic member, said means being selected from the group consisting of dove tails, pins, lands, wedges and the like and/ or cooperating forms such as grooves, recesses, projections and the like.

In a further embodiment, the threads of the at least partially threaded area of the ceramic member are coated with lubrication additives selected from the group of graphite, molybdenum disulfide, PTFE, boron nitride, refractory metals, mineral oils, or mixtures thereof.

In a further embodiment, the threads of the at least partially threaded area of the inner shell of the ceramic member have a tolerance of less than +/- 0.2 mm to match the tolerances of the tubular connecting member.

The ceramic member assembly according to this invention comprises at least two ceramic members according to this invention being connected by at least one tubular composite member according to this invention with the appropriate shape, whereas the ends of said tubular composite member are screwed into either corresponding annular groove of two adjacent ceramic members.

In the ceramic member assembly according to this invention the annular grooves of adjacent ceramic members may either have different depths.

Reference is now made to the accompanying drawings, in which
Figs. 1A to K represent cross-sectional views of various embodiments of the tubular composite member according to the present invention.
Figs. 2A to C represent cross-sectional views of the annular groove area of various embodiments of the ceramic member according to the present invention.
Figs. 3A to C represent top views of the annular groove area of various embodiments of the ceramic member according to the present invention.
Figs. 4A to F represent cross-sectional views the joint area of various embodiments of the ceramic member assembly according to the present invention.

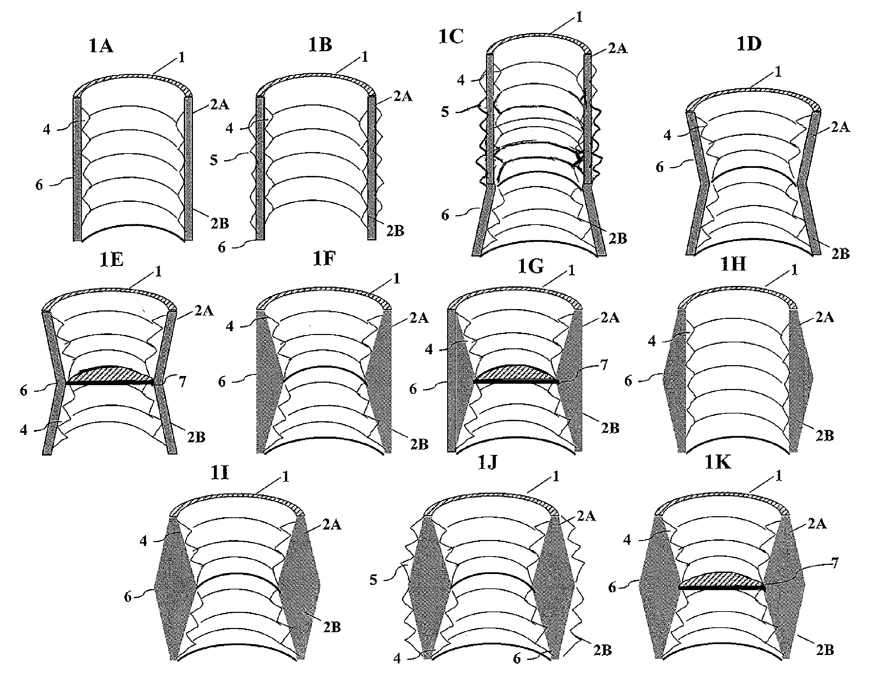

In Fig. 1A, a cross-sectional view is shown of a tubular composite member (1) with two ends (2A and 2 B) for connecting ceramic components (3) having an at least partially threaded internal surface (4) and being made of a composite comprising an inorganic matrix reinforced with inorganic fibers.

In Fig. 1B, a cross-sectional view is shown of a tubular composite member (1) with two ends (2A and 2 B) for connecting ceramic components (3) having an at least partially threaded internal surface (4) as well as an at least partially threaded internal surface (5).

In Fig. 1C, a cross-sectional view is shown of a tubular composite member (1) with two ends (2A and 2 B) for connecting ceramic components (3) having an at least partially threaded internal surface (4). In this embodiment, only the end 2A has as well as an at least partially threaded external surface (5). Further, in the shown embodiment one (2B) of both ends (2 A, B) is tapered away from its rotational axis to form an inverted conical shape of said end (2B).

In Fig. 1D, a cross-sectional view is shown of a tubular composite member (1), wherein both the at least partially threaded internal surface (4) as well as the external surface (6) are axially tapered towards their rotational axis thus forming an inverted bi-conical tube. In Fig. 1E, this embodiment is further mechanically stiffened with a cross-beam (7).

In Fig. 1F, a cross-sectional view is shown of a tubular composite member (1), wherein the at least partially threaded internal surface (4) is axially tapered towards its rotational axis thus forming an inverted bi-conical shape of said surface. In Fig. 1G, this embodiment is further mechanically stiffened with a cross-beam (7).

In Fig. 1H, a cross-sectional view is shown of a tubular composite member (1) wherein the external surface (6) is axially thickened away from its rotational axis, thus forming a double-frustoconical shape of said surface (6).

In Fig. 1I, a cross-sectional view is shown of a tubular composite member (1) wherein the least partially threaded internal surface (4) is axially tapered towards its rotational axis to form an inverted bi-conical shape of said surface (4) and the external surface (6) is axially thickened away from its rotational axis to form a double-frustoconical shape of said surface (6).

In Fig. 1J, the embodiment shown in Fig. 1I is additionally provided with an at least partially threaded external surface (5).

In Fig. 1K, the embodiment shown in Fig. 1I is further mechanically stiffened with a cross-beam (7).

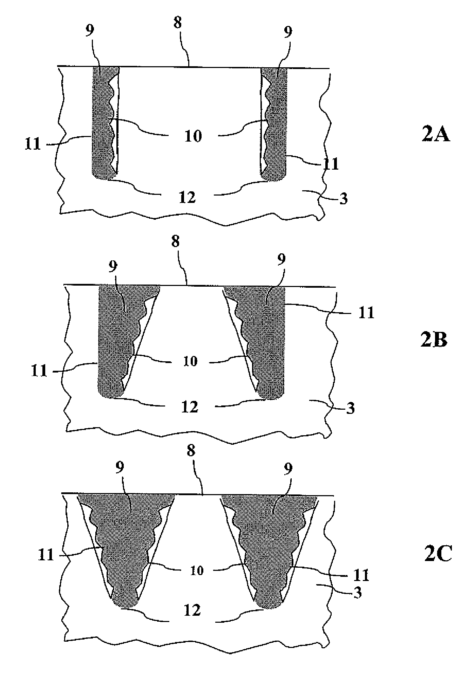

In Fig. 2A, a cross-sectional view is shown of the annular groove area of a ceramic member (3) according to the present invention. The ceramic member (3) has at least one surface (8) provided with at least one annular groove (9) comprising an inner shell surface (10), an outer shell surface (11) and a root (12), wherein the inner shell surface (10) is at least partially threaded.

In Fig. 2B, a cross-sectional view is shown of the annular groove area of a ceramic member (3) where the inner shell surface (10) of the at least one annular groove (9) is axially tapered towards the at least one grooved surface (8) of the ceramic member (3) forming a frustum.

Not shown here is a further embodiment, where the outer shell surface (11) of the at least one annular groove (9) is axially enlarged towards the at least one grooved surface (8) of the ceramic member (3).

In Fig. 2C, a cross-sectional view is shown of the annular groove area of a ceramic member (3) where the inner shell surface (10) of the at least one annular groove (9) is axially tapered towards the at least one grooved surface (8) of the ceramic member (3) forming a frustum and the outer shell surface (12) of said annular groove (9) is axially enlarged towards the at least one grooved surface (8) of the ceramic member (9). Further, the outer shell surface (12) is at least partially threaded in the shown embodiment.

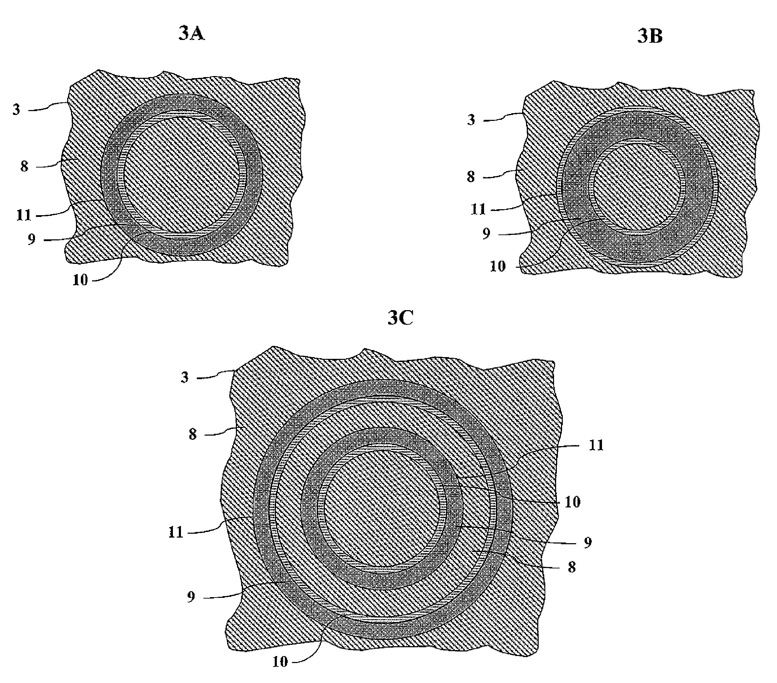

In Fig. 3A a top view is shown of the annular groove area of a ceramic member (3) of this invention. The ceramic member (3) has a grooved surface (8) provided with one annular groove (9) comprising an inner shell surface (10), an outer shell surface (11) and a root (12), wherein the inner shell surface (10) is at least partially threaded.

In Fig. 3B a top view is shown of the annular groove area of a ceramic member (3) of this invention. The ceramic member (3) has a grooved surface (8) provided with one annular groove (9) comprising an inner shell surface (10), an outer shell surface (11) and a root (12), wherein the inner shell surface (10) as well as the outer shell surface (11) are at least partially threaded.

In Fig. 3A a top view is shown of the annular groove area of a ceramic member (3) of this invention. The ceramic member (3) has a grooved surface (8) provided with two annular grooves (9) each comprising an inner shell surface (10), an outer shell surface (11) and a root (12), wherein the inner shell surfaces (10) are at least partially threaded.

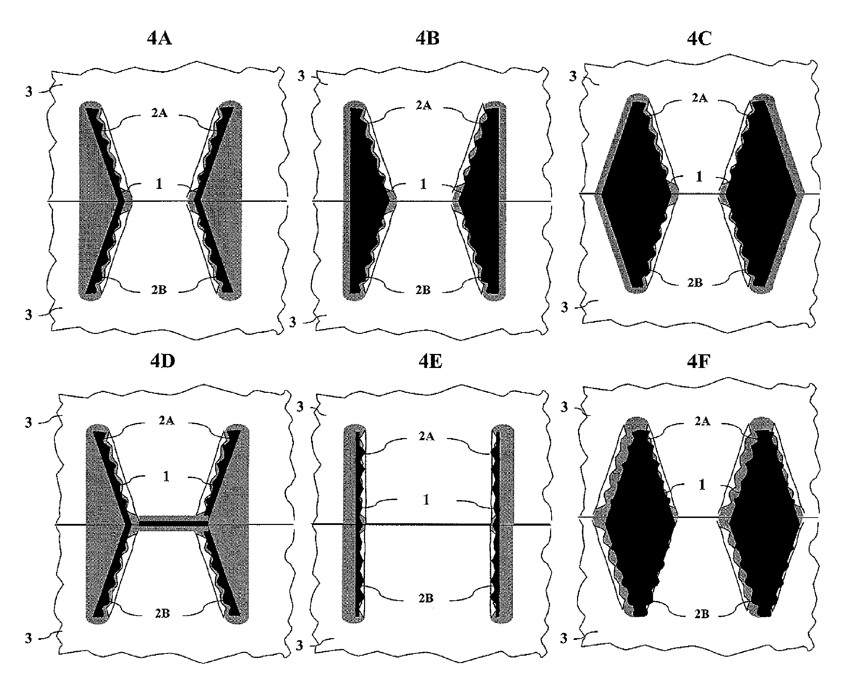

In Fig. 4A, a cross-sectional view is shown of a ceramic member assembly according to this invention, comprising at least two ceramic members (3) of this invention connected by at least one tubular composite member (1) of this invention, whereas the ends (2 A, B) of said tubular composite member (1) are screwed into either corresponding annular groove (9) of two adjacent ceramic members (3).

Figs. 4B to F show various embodiments of ceramic members (3) with varying annular groove (9) shapes being connected by tubular composite members (1) of respective shapes.

In a further embodiment, the annular grooves (9) of adjacent ceramic members (3) may either have different depths.

### EXAMPLE

A roving consisting of 5 bundles of 12000 high-modulus PAN-based carbon fibers (diameter: 10 µm) was impregnated, under tension, with a phenolic resin at a volume ratio of 50 (carbon fiber) : 50 (phenolic resin), to produce a carbon fiber-containing resin film of 200 µm in thickness in which the carbon fibers were arranged in the same direction.

An aluminum-made cylindrical mandrel was provided with threaded grooves.

This carbon fiber-containing resin film was wound around the mandrel in a plurality of layers so that the carbon fiber in each layer was arranged so that 50% by weight of the fibers were arranged in a direction with an angle of ±(10 to 20)° to the cylinder axial direction and 50% by weight of the fibers forming said tubular member are arranged in a direction making an angle of ±(70 to 90)° to the cylinder axial direction relative to the cylinder axial direction. Thereafter, a shrink tape was wound thereon. The resulting laminate was heated for curing.

After curing, the cylinder was detached from the mandrel and carbonized at 1000°C in inert gas atmosphere.

The thus produced CFRC cylinder had a length of 180 mm and an outside diameter of 316 mm and an inside diameter of 300 mm. The threaded internal surface had a thread pitch of 10 mm, a thread depth of 3 mm and a thread radius of 3 mm (R3).

Two cylindrical pieces of synthetic graphite, each having a length of 2000 mm and a diameter of 750 mm were each provided with an annular groove of 100 mm depth, an outer diameter of 425 mm and an inner diameter of 360 mm. The inner shell surface of the annular groove was fully threaded by means of CNC machining tools to match the thread design of the CFRC cylinder.

Both cylindrical pieces of graphite were tightly assembled by screwing the CFRC ring into either of their annular grooves.

The thus completed assembly was subjected to dynamic mechanical forces and rapid immersion times in a hot metal bath at 1500 °C without failing of the joint.

These and other tests have shown that the present invention provides an effective solution for fastening/ joining ceramic members when those are used at high temperatures (above 1000 °C) especially under thermal cycling and/or thermal shock conditions as well as dynamic mechanical load in different directions.

### KEY TO FIGURES

- 1: tubular composite member
- 2 A/B: ends of tubular composite member
- 3: ceramic member
- 4: at least partially threaded internal surface of tubular composite member
- 5: at least partially threaded external surface of tubular composite member
- 6: external surface of tubular composite member
- 7: cross-beam for mechanical stiffening
- 8: grooved surface of ceramic member
- 9: annular groove
- 10: inner shell surface of annular groove
- 11: an outer shell surface of annular groove
- 12: groove root

## Claims

1. A tubular composite member (1) with two ends (2 A,B) for connecting ceramic components (3) having an at least partially threaded internal surface (4) and an external surface (6) and being made of a composite comprising an inorganic matrix reinforced with inorganic fibers.

2. The tubular composite member (1) according to claim 1, wherein the external surface 6 is at least partially threaded.

3. The tubular composite member (1) according to claim 1, wherein both the internal surface (4) as well as the external surface (6) of the said member are axially tapered towards their rotational axis thus forming an inverted bi-conical tube.

4. The tubular composite member (1) according to claims 1 or 2, wherein the internal surface (4) is axially tapered towards its rotational axis thus forming an inverted bi-conical shape of said surface (4).

5. The tubular composite member (1) according to claims 1 or 2, wherein the external surface (6) is axially thickened away from its rotational axis, thus forming a double-frustoconical shape of said surface (6).

6. The tubular composite member (1) according to claims 1 or 2, wherein the external surface (6) is axially thickened away from its rotational axis to form an inverted bi-conical shape of said surface (6) and wherein the internal surface (4) is axially tapered towards its rotational axis to form a double-frustoconical shape of said surface (4).

7. The tubular composite member (1) according to claims 1 or 2, wherein one of both ends (2 A or B) is tapered away from its rotational axis to form an inverted conical shape of said end (2 A or B).

8. The tubular composite member (1) according to one of the above claims, wherein said inorganic fibers are selected from the group consisting of oxide ceramics, non-oxide ceramics, carbon, graphite or mixtures thereof.

9. The tubular composite member (1) according to one of the above claims, wherein said inorganic matrix is selected from the group consisting of oxide ceramics, non-oxide ceramics, carbon, graphite or mixtures thereof.

10. The tubular composite member (1) according to one of the above claims, wherein said inorganic fibers comprise at least 30% by volume of said composite.

11. The tubular composite member (1) according to one of the above claims, wherein said inorganic fibers having a length of at least 10 cm.

12. The tubular composite member (1) according to one of the above claims, wherein said inorganic fibers are aligned in a manner that at least 10% by weight, preferably at least 20% by weight of the fibers forming said tubular member are arranged in a direction with an angle of ±(10 to 20)° to the cylinder axial direction and at least 10% by weight, preferably at least 20% by weight of the fibers forming said tubular member are arranged in a direction making an angle of ±(70 to 90)° to the cylinder axial direction.

13. The tubular composite member (1) according to one of the above claims, wherein said inorganic fibers are configured as filaments, bundles, yarns, woven, knitted or braided fabrics, non-crimped fabrics, non-wovens or mixtures thereof.

14. The tubular composite member (1) according to one of the above claims, wherein the threads of the at least partially threaded internal surface 4 have a tolerance of less than +/- 0.2 mm.

15. The tubular composite member (1) according to one of the above claims, wherein said composite member (1) is additionally provided with lubrication additives selected from the group of graphite, molybdenum disulfide, PTFE, boron nitride, refractory metals, mineral oils, or mixtures thereof.

16. The tubular composite member (1) according to one of the above claims, wherein said composite member (1) is additionally provided with strength improving additives selected from the group of short inorganic fibers, inorganic nanofibers, or mixtures thereof.

17. The tubular composite member (1) according to one of the above claims, wherein said composite member (1) is additionally provided with oxidation retarding additives selected from the group of ammonium phosphate, zinc orthophosphate, phosphoric acid, boric acid, cupric oxide, oxide ceramics, refractory metals, or mixtures thereof.

18. The tubular composite member (1) according to one of the above claims, wherein said composite member (1) is additionally provided with a sleeve made of expanded graphite foil.

19. A ceramic member (3) having at least one surface (8) provided with at least one annular groove (9) comprising an inner shell surface (10), an outer shell surface (11) and a root (12), wherein the inner shell surface (10) is at least partially threaded.

20. The ceramic member (3) of claim 19, wherein the outer shell surface (11) is at least partially threaded.

21. A ceramic member (3) of claims 19 or 20, wherein the inner shell surface (10) of the at least one annular groove (9) is axially tapered towards the at least one grooved surface (8) of the ceramic member (3) forming a frustum.

22. A ceramic member (3) of claims 19 or 20, wherein the outer shell surface (11) of the at least one annular groove (9) is axially enlarged towards the at least one grooved surface (8) of the ceramic member (3).

23. A ceramic member (3) of claims 19 or 20, wherein the inner shell surface (10) of the at least one annular groove (9) is axially tapered towards the at least one grooved surface (8) of the ceramic member (3) forming a frustum and the outer shell surface (11) of said annular groove (9) is axially enlarged towards the at least one grooved surface (8) of the ceramic member (3).

24. The ceramic member (3) of one of claims 19 to 23, wherein said member (3) is selected from the group consisting of oxide ceramics, non-oxide ceramics, carbon, graphite, or mixtures thereof.

25. The ceramic member (3) of one of claims 19 to 24, wherein said at least one surface (8) is additionally provided with means to correctly position and/ or lock said ceramic member in relation to an adjacent ceramic member, said means being selected from the group consisting of dove tails, pins, lands, wedges and the like and/ or cooperating forms such as grooves, recesses, projections and the like.

26. The ceramic member (3) of one of claims 19 to 25, wherein the threads of the at least partially threaded surfaces (10, 11) are coated with lubrication additives selected from the group of graphite, molybdenum disulfide, PTFE, boron nitride, refractory metals, mineral oils, or mixtures thereof.

27. The ceramic member (3) of one of claims 19 to 26, wherein the threads of the at least partially threaded surface (10) of the inner shell have a tolerance of less than +/- 0.2 mm.

28. A ceramic member (3) assembly comprising at least two ceramic members (3) of one of claims 19 or 20 being connected by at least one tubular composite member (1) according to claims 1 or 2, whereas the ends (2 A, B) of said tubular composite member (1) are screwed into either corresponding annular groove (9) of two adjacent ceramic members (3).

29. A ceramic member (3) assembly comprising at least two ceramic members (3) of claim 21 being connected by at least one tubular composite member (1) according to claims 3 or 4, whereas the ends (2 A, B) of said tubular composite member (1) are screwed into either corresponding annular groove (9) of two adjacent ceramic members (3).

30. A ceramic member (3) assembly comprising at least two ceramic members (3) of claim 22 being connected by at least one tubular composite member (1) according to claim 5, whereas the ends (2 A, B) of said tubular composite member (1) are screwed into either corresponding annular groove (9) of two adjacent ceramic members (3).

31. A ceramic member (3) assembly comprising at least two ceramic members (3) of claim 23 being connected by at least one tubular composite member (1) according to claim 6, whereas the ends (2 A, B) of said tubular composite member (1) are screwed into either corresponding annular groove (9) of two adjacent ceramic members (3).

32. The ceramic member (3) assembly of claims 28 or 31, wherein the annular grooves (9) of adjacent ceramic members (3) either have different depths.

33. A method for manufacturing a tubular composite member (1) for connecting ceramic components having an at least partially threaded internal surface comprising:
(a) impregnating inorganic fibers with a matrix material
(b) providing a mandrel having at least partially threaded grooves with a tolerance of less than +/- 0.2 mm
(c) winding said impregnated fibers under tension in more than one direction on said mandrel to form a tubular member
(d) curing said tubular member on the mandrel at elevated temperatures up to 500 °C
(e) subjecting said tubular member to a heat treatment at high temperatures up to 3200 °C preferably in inert atmosphere.

34. A method for manufacturing a tubular composite member (1) for connecting ceramic components having an at least partially threaded internal surface and an at least partially threaded external surface comprising:
(a) impregnating inorganic fibers with a matrix material
(b) providing a mandrel having at least partially threaded grooves with a tolerance of less than +/- 0.2 mm
(c) winding said impregnated fibers under tension in more than one direction on said mandrel to form a tubular member
(d) providing a generally cylindrical die having a plurality of die parts for surround at least the part of the tubular member that is to be provided with a threaded external surface
(e) in a compression step, closing the heated die parts onto the tubular member to form a threaded external surface
(f) releasing the die parts
(g) curing said tubular member on the mandrel at elevated temperatures up to 500 °C
(h) subjecting said tubular member to a heat treatment at high temperatures up to 3200 °C preferably in inert atmosphere.

35. The method of claims 33 or 34, wherein the tubular member is detached from the mandrel after curing.

36. The method of one of the claims 33 to 35, wherein the pyrolized tubular member is subjected to further densification either by impregnation followed by pyrolysis or by chemical vapour infiltration.

37. The method of one of the claims 33 to 36, wherein the inorganic fibers are selected from the group consisting of oxide ceramics, non-oxide ceramics, carbon, graphite or mixtures thereof.

38. The method of one of the claims 33 to 37, wherein said matrix material is selected from the group consisting of pre-ceramic pre-cursors, high carbon-yielding carbonaceous materials or mixtures thereof.
